(19) Europäisches Patentamt
European Patent Office
Office européen des brevets

(11) **EP 2 107 787 A1**

(12) **EUROPEAN PATENT APPLICATION**

(43) Date of publication:
**07.10.2009 Bulletin 2009/41**

(51) Int Cl.:
***H04N 1/387*** (2006.01)

(21) Application number: **09004591.5**

(22) Date of filing: **30.03.2009**

| | |
|---|---|
| (84) Designated Contracting States:<br>**AT BE BG CH CY CZ DE DK EE ES FI FR GB GR HR HU IE IS IT LI LT LU LV MC MK MT NL NO PL PT RO SE SI SK TR**<br>Designated Extension States:<br>**AL BA RS** | (72) Inventors:<br>• **Iwaki, Yasuharu**<br>  **Kanagawa-ken (JP)**<br>• **Imai, Yoshiro**<br>  **Kanagawa-ken (JP)**<br>• **Chen, Tao**<br>  **Kanagawa-ken (JP)** |
| (30) Priority: **31.03.2008 JP 2008090667** | (74) Representative: **Höhfeld, Jochen**<br>**Klunker Schmitt-Nilson Hirsch**<br>**Patentanwälte**<br>**Destouchesstrasse 68**<br>**80796 München (DE)** |
| (71) Applicant: **FUJIFILM Corporation**<br>**Minato-ku**<br>**Tokyo (JP)** | |

(54) **Image trimming device**

(57)     An image trimming device involves: extracting a region of interest from an original image (11); detecting a set of features for each region of interest (12); determining whether each region of interest should be placed inside or outside a trimming frame based on the set of features and setting the trimming frame in the image (13); extracting an image inside the trimming frame (14); determining a positional relationship between each region of interest and the trimming frame and increasing or decreasing probability of each region of interest to be placed inside the trimming frame depending on if the region has a set of features similar to that of another region of interest previously placed inside the trimming frame or previously placed outside the trimming frame (15, 16, 17).

# FIG.3A

EP 2 107 787 A1

# FIG.3B

**Description**

BACKGROUND OF THE INVENTION

Field of the Invention

The present invention relates to an image trimming device that extracts, from image data representing an image, only a part of the image data which represents a partial area of the image. The invention also relates to a program to cause a computer to function as the image trimming device.

Description of the Related Art

It has commonly been conducted to extract, from image data representing a certain image, only a part of the image data which represents a partial area of the image. This type of image trimming is applied, for example, for processing a photographic picture represented by digital image data into a photographic picture which dose not contain unnecessary areas.

In many cases, the image trimming is carried out using a computer system, where an image is displayed on an image display means based on original image data. As the operator manually sets a trimming frame on the image, image data representing an area of the image inside the frame is extracted from the original image data.

It has recently been proposed to automatically set the trimming frame, which is likely to be desired by the user, without necessitating manual setting of the trimming frame by the operator, as disclosed, for example, in Japanese Unexamined Patent Publication No. 2007-258870. Such automatic setting of the trimming frame is achievable with an image trimming device that basically includes: region of interest extracting means for extracting a region of interest from an image represented by original image data; feature detecting means for detecting a set of features of each extracted region of interest; trimming frame setting means for determining whether each region of interest should be placed inside a trimming frame or outside the trimming frame based on the set of features detected for the region of interest and setting the trimming frame in the image; and image data extracting means for extracting, from the original image data, image data representing an image inside the set trimming frame.

Specifically, the image trimming device as described above can be implemented, for example, by causing a computer system to functions as the above-described means according to a predetermined program.

For extracting the region of interest from an image represented by image data, a technique disclosed in "A Model of Saliency-Based Visual Attention for Rapid Scene Analysis", L. Itti et al., IEEE TRANSACTIONS ON PATTERN ANALYSIS AND MACHINE INTELLIGENCE, Vol. 20, No. 11, NOVEMBER 1998, pp. 1254-1259 for example, can be applied. Details of this technique will be described later.

The above-described technique for automatically setting the trimming frame, however, has a problem of low accuracy as to likelihood of the automatically set trimming frame being actually desired by the user. That is, the automatically set trimming frame may not contain an area which is desired by the user to be contained in a trimmed image (for example, an area of a person in a person picture), or in contrast, the automatically set trimming frame may contain an area which is considered as unnecessary by the user (for example, a peripheral object in a person picture).

SUMMARY OF THE INVENTION

In view of the above-described circumstances, the present invention is directed to providing an image trimming device that allows to automatically set a trimming frame as desired by the user with higher accuracy.

The invention is further directed to providing a media containing a program that causes a computer to function as the above-described image trimming device.

One aspect of the image trimming device according to the invention is an image trimming device provided with a function to automatically set a trimming frame, as described above. Namely, the image trimming device includes: region of interest extracting means for extracting a region of interest from an image represented by original image data; feature detecting means for detecting a set of features for each extracted region of interest; trimming frame setting means for determining whether each region of interest should be placed inside a trimming frame or outside the trimming frame based on the set of features detected for each region of interest and setting the trimming frame in the image; image data extracting means for extracting image data representing an image inside the set trimming frame from the original image data; and learning means for carrying out first learning and/or second learning by determining a positional relationship between each region of interest and the set trimming frame, the first learning being carried out to increase probability of each region of interest to be placed inside the trimming frame when the region of interest has a set of features similar to a set of features of another region of interest previously placed inside the trimming frame, and the second learning being carried out to decrease probability of each region of interest to be placed inside the trimming frame when the region of interest has a set of features similar to a set of features of another region of interest previously placed outside the trimming frame.

As described above, both of or one of the first learning and the second learning may be carried out.

More specifically, the learning means may include: correcting means for carrying out first correction and/or second correction after the trimming frame has been set, the first correction being carried out to correct at least one feature of the set of features of each region of interest inside the trimming frame to increase the probability of the region of interest to be placed inside the trimming frame, and the second correction being carried out to correct at least one feature of the set of features of each region of interest outside the trimming frame to decrease the probability of the region of interest to be placed inside the trimming frame; storing means for storing the corrected set of features; and controlling means for searching through the storing means for a previously stored set of features similar to a set of features detected in current feature detection carried out by the feature detecting means, and inputting the searched-out set of features to the trimming frame setting means.

As described above, both of or one of the first correction and the second correction may be carried out.

Further, in the image trimming device of the invention, the feature detecting means may detect a position in the trimming frame of the region of interest as one of the features, and the trimming frame setting means may set, before setting the trimming frame based on the set of features, an initial trimming frame for defining the position in the trimming frame.

In the case where the trimming frame setting means sets the initial trimming frame, the trimming frame setting means may set, for example, a predetermined fixed trimming frame as the initial trimming frame.

Alternatively, in the case where the trimming frame setting means sets the initial trimming frame, the trimming frame setting means may set the initial trimming frame based on frame specifying information fed from outside.

One aspect of a recording medium containing a program according to the invention includes a program for causing a computer to function as: region of interest extracting means for extracting a region of interest from an image represented by original image data; feature detecting means for detecting a set of features for each extracted region of interest; trimming frame setting means for determining whether each region of interest should be placed inside a trimming frame or outside the trimming frame based on the set of features detected for each region of interest and setting the trimming frame in the image; image data extracting means for extracting image data representing an image inside the set trimming frame from the original image data; and learning means for carrying out first learning and/or second learning by determining a positional relationship between each region of interest and the set trimming frame, the first learning being carried out to increase probability of each region of interest to be placed inside the trimming frame when the region of interest has a set of features similar to a set of features of another region of interest previously placed inside the trimming frame, and the second learning being carried out to decrease probability of each region of interest to be placed inside the trimming frame when the region of interest has a set of features similar to a set of features of another region of interest previously placed outside the trimming frame.

The program may optionally cause the learning means to function as: correcting means for carrying out first correction and/or second correction after the trimming frame has been set, the first correction being carried out to correct at least one feature of the set of features of each region of interest inside the trimming frame to increase the probability of the region of interest to be placed inside the trimming frame, and the second correction being carried out to correct at least one feature of the set of features of each region of interest outside the trimming frame to decrease the probability of the region of interest to be placed inside the trimming frame; storing means for storing the corrected set of features; and controlling means for searching through the storing means for a previously stored set of features similar to a set of features detected in current feature detection carried out by the feature detecting means, and inputting the searched-out set of features to the trimming frame setting means.

In the recording medium containing a program according to the invention, the feature detecting means may detect a position in the trimming frame of the region of interest as one of the features, and the trimming frame setting means may set, before setting the trimming frame based on the set of features, an initial trimming frame for defining the position in the trimming frame.

In the case where the trimming frame setting means sets the initial trimming frame, the trimming frame setting means may set, for example, a predetermined fixed trimming frame as the initial trimming frame.

Alternatively, in the case where the trimming frame setting means sets the initial trimming frame, the trimming frame setting means may set the initial trimming frame based on frame specifying information fed from outside.

BRIEF DESCRIPTION OF THE DRAWINGS

FIG. 1 is a diagram illustrating the schematic configuration of an image trimming device according to one embodiment of the present invention,

FIG. 2 is a flow chart illustrating the flow of a process carried out in the image trimming device,

FIG. 3A is a schematic diagram illustrating an example of a trimming frame set in an original image,

FIG. 3B is a schematic diagram illustrating an another example of the trimming frame set in the original image,

FIG. 4 is a diagram for explaining how a region of interest is extracted,

FIG. 5A shows one example of the original image,

FIG. 5B shows an example of a saliency map corresponding to the original image shown in FIG. 5A,

FIG. 6A shows another example of the original image, and

FIG. 6B shows an example of a saliency map corresponding to the original image shown in FIG. 6A.

DESCRIPTION OF THE PREFERRED EMBODIMENTS

Hereinafter, an embodiment of the present invention will be described in detail with reference to the drawings.

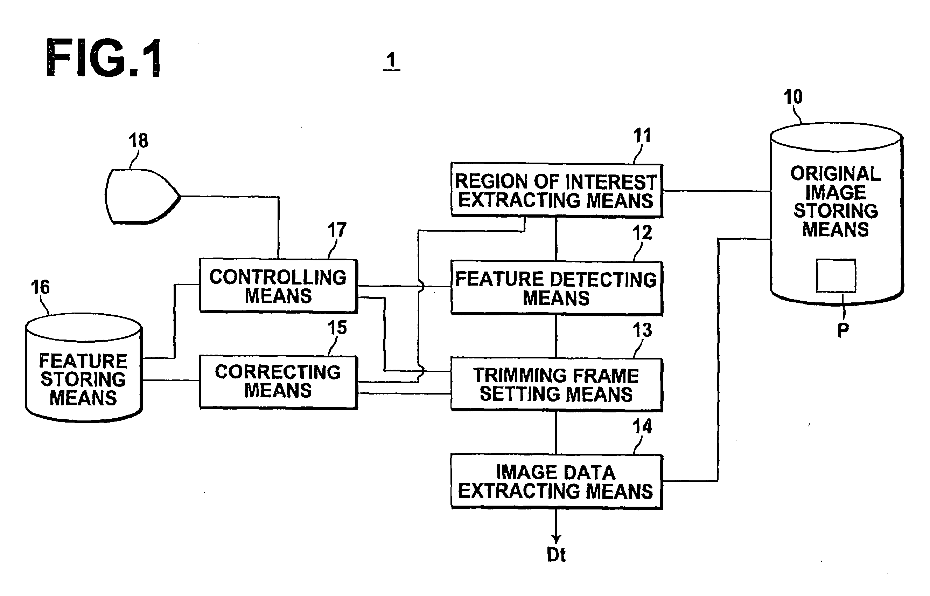

FIG. 1 illustrates the schematic configuration of an image trimming device 1 according to one embodiment of the invention. The image trimming device 1 is implemented by running on a computer, such as a workstation, an application program stored in an auxiliary storage device (not shown) . The program of the image trimming process may be distributed in the form of a recording medium, such as a CD-ROM, containing the program and installed on the computer from the recording medium, or may be downloaded from a server connected to a network, such as the Internet, and installed on the computer. Although the image trimming device 1 of this embodiment is assumed to be used at a photo shop, the program may be used, for example, on a PC (personal computer) of an end user.

Operations for causing the computer to function as the image trimming device 1 are carried out using a usual I/O interface, such as a keyboard and/or a mouse, however, such operations are not shown in the drawings and explanations thereof are omitted unless necessary.

The image trimming device 1 includes: an original image storing means 10 to store an original image P in the form of digital image data (original image data); a region of interest extracting means 11 to extract a region of interest from the original image P based on colors and intensities of the original image P and orientations of straight line components appearing in the original image P; a feature detecting means 12 to detect a set of features for each region of interest extracted by the region of interest extracting means 11; a trimming frame setting means 13 to determine whether each region of interest should be placed inside the frame or outside the frame based on the set of features detected for the region of interest by the feature detecting means 12, and to set a trimming frame in the original image P; and an image data extracting means 14 to extract, from the original image data P, image data representing an image inside the set trimming frame.

The original image storing means 10 may be formed by a high-capacity storage device, such as a hard disk drive. The original image storing means 10 stores images taken with a digital still camera or digital video camera, or illustration images created with an image creation software application, or the like. Usually, the original image P is a still image, and the following description is based on this premise.

The image trimming device 1 further includes: a correcting means 15 which is connected to the region of interest extracting means 11, the feature detecting means 12 and the trimming frame setting means 13; a feature storing means 16 which is connected to the correcting means 15; a controlling means 17 which is connected to the feature storing means 16 as well as the feature detecting means 12 and the trimming frame setting means 13; and a display means 18, such as a liquid crystal display device or a CRT display device, which is connected to the controlling means 17.

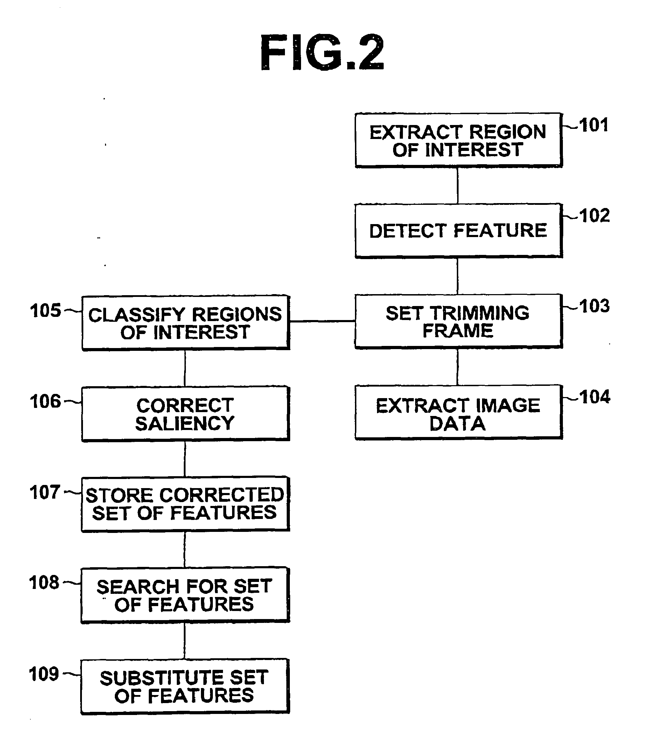

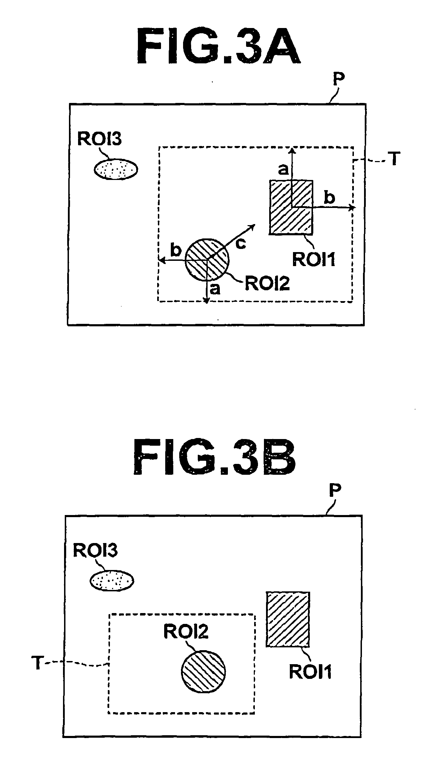

Now, operation of the image trimming device 1 having the above-described configuration is described with reference to FIG. 2, which shows the flow of the process carried out in this device. To automatically trim an image, first, the region of interest extracting means 11 retrieves image data representing the original image P from the original image storing means 10, and then, automatically extracts a region of interest from the retrieved image data (step 101 in FIG. 2). An example of the region of interest is schematically shown in FIG. 3A. In the example of FIG. 3A, three regions of interest ROI1, ROI2 and ROI3 are present in the original image P. The regions of interest may, for example, be a person in a person picture image, or an object, such as a building or an animal, in a landscape picture image that is apparently different from the surrounding area. The region of interest and automatic extraction of the region of interest are described in detail later.

Then, the feature detecting means 12 detects a set of features for each extracted region of interest (step 102) . In this embodiment is, for example, [color, texture, size, position in the trimming frame, saliency] are used as the features. The position in the trimming frame is defined, for example, by a distance from the center of the region to an upper or lower side of a trimming frame T, a distance from the center of the region to a right or left side of the trimming frame T, or a distance from the center of the region to the center of the frame, which are respectively indicated by a, b and c in FIG. 3A.

It should be noted that the actual value of the position in the trimming frame has not been known when the system is first used, and therefore, the position in the trimming frame is necessary to be determined in advance. As one method, an appropriate initial trimming frame To may be set to use the position of the region of interest in the initial trimming frame To as the position in the trimming frame. The initial trimming frame To may be set according to a positional relationship with the region of interest. For example, the initial trimming frame To may be set along the periphery of the image such that all the regions of interest are contained in the frame, or may be set at a predetermined distance from the center of the image in each of the upper, lower, right and left directions such that only the region of interest positioned around the center of the image is contained in the frame. Alternatively, the initial trimming frame To may be set such that only the region of interest having any of the other features, such as saliency, being higher than a particular threshold. In a case where it is desired to reflect intention of the operator of the device, the operator may manually input frame specifying information via the above-described I/O interface, or the like, so that the initial trimming frame $T_0$ is set based on the frame specifying information.

After the initial trimming frame To has been set as described above, the position of the region of interest defined in the frame $T_0$ is tentatively used as the position in the trimming frame, and the actual value of the position in the trimming frame will be obtained after the trimming frame T is set in the subsequent operations.

The saliency indicates a probability of each region of interest to attract attention, and is obtained when the region of interest is extracted by the region of interest extracting means 11. The saliency is represented, for example, by a numerical value, such that the larger the value, the higher the saliency of the region of interest, i.e., the higher the adequacy of the region of interest to be placed inside the trimming frame T.

Then, based on the thus obtained sets of features of the regions of interest ROI1, ROI2 and ROI3, the trimming frame setting means 13 determines whether each region of interest should be placed inside the frame or outside the frame according to conditions such that one having a saliency value higher than a particular threshold is placed inside the frame and one having a lower saliency value is placed outside the frame, or one having a particular color or texture is placed inside the frame, and sets the trimming frame T in the original image P (step 103). FIGs. 3A and 3B show examples of the trimming frame T set as described above. In FIG. 3A, the trimming frame T is set such that the regions of interest ROI1 and ROI2 are placed inside the frame and the region of interest ROI3 is placed outside the frame. In FIG. 3B, the trimming frame T is set such that the region of interest ROI2 is placed inside the frame and the regions of interest ROI1 and ROI3 are placed outside the frame.

It may be desirable that the setting of the trimming frame T is not completely automatic, and the image trimming device may allow the operator to check the automatically determined trimming frame, which is displayed on the display means 18 via the controlling means 17, and appropriately correct the trimming frame through the I/O interface. When the operator confirms that the frame is optimally set, the operator may make a determination operation to finally set the frame. This allows providing images trimmed with a higher accuracy for the user. It should be noted that, by reflecting the result of correction by the operator at this time in learning, and continuing the above-described trimming operation for the remaining images, learning efficiency and operating efficiency can be increased.

Then, the image data extracting means 14 extracts, from the original image data, image data representing the image inside the set trimming frame T (step 104). Using the thus extracted image data Dt, only the image inside the trimming frame T can be recorded fully in a recording area of a recording medium, or can be displayed fully on a display area of an image display device.

Next, a learning function which allows automatic setting of the trimming frame T as desired by the user with higher accuracy is described. As the trimming frame T has been set by the trimming frame setting means 13, the correcting means 15 classifies all the regions of interest extracted by the region of interest extracting means 11 into those inside the trimming frame T and those outside the trimming frame T (step 105). For each region of interest inside the trimming frame T, a correction is applied to increase the feature "saliency", among the set of features [color, texture, size, position in the trimming frame, saliency] obtained for the region of interest, by a predetermined value. In contrast, for each region of interest outside the trimming frame T, a correction is applied to decrease the "saliency" by a predetermined value (step 106). Then, the set of features [color, texture, size, position in the trimming frame, saliency] for each region of interest after the correction are stored in the feature storing means 16 with being associated with each region of interest (step 107).

Thereafter, when another trimming operation is made for another original image P, the set of features detected by the feature detecting means 12 for the image is substituted with a set of features stored in the feature storing means 16 that is similar to the detected set of features (this operation is equivalent to substituting a part of the detected set of features with a corresponding feature (s) in the stored set of features). Namely, the set of features [color, texture, size, saliency] detected by the feature detecting means 12 at this time is sent to the controlling means 17, and the controlling means 17 searches through the feature storing means 16 for a region of interest having a set of features [color, texture, size, saliency] that is similar to the set of features [color, texture, size, saliency] sent thereto (step 108).

The set of features stored in the feature storing means 16 include the corrected "saliency", as described above. Therefore, when the sent set of features is compared with the searched-out set of features, if values of the features "color", "texture" and "size" of the two sets of features are similar or equal to each other, the remaining feature "saliency" is different between the two sets of features. Namely, if the region of interest should be placed inside the trimming frame T, the feature "saliency" of the searched-out set of features is larger than that of the sent set of features. In contrast, if the region of interest should be placed outside the trimming frame T, the feature "saliency" of the searched-out set of features is smaller than that of the sent set of features.

Then, values of the set of features [color, texture, size, position in the trimming frame, saliency] found through the above search are modified to be equal to or near to the values of the set of features detected by the feature detecting means 12.

At this time, if it is whished to increase the intensity of learning, values of the searched-out set of features may be modified to values which more strongly influence determination of whether the region of interest to be placed inside or outside the trimming frame than values of the set of features detected by the feature detecting means 12. That is, if the value of the "saliency" has a large influence on determination of the region of interest to be placed inside the trimming frame, the value of the "saliency" of the searched-out set of features may be set larger than the value of the "saliency" of the set of features detected by the feature detecting means 12.

The thus modified set of features is sent to the trimming frame setting means 13 in place of the set of features detected by the feature detecting means 12 (step 109). Then, the trimming frame setting means 13 sets the trimming frame T, as described above, based on the modified set of features [color, texture, size, position in the trimming frame, saliency].

In this manner, for a region of interest which is similar to the region of interest placed inside the trimming frame T during the previous trimming frame setting, first learning to increase the probability of the region of interest to be placed inside the trimming frame T is carried out. In contrast, for a region of interest which is similar to the region of interest placed outside the trimming frame T during the previous trimming frame setting, second learning to decrease the probability of the region of interest to be placed inside the trimming frame T is carried out. Thus, image trimming to place a region of interest, which is desired by the user to be contained in the trimming frame T, inside the trimming frame T with higher probability, and to place a region of interest, which is desired by the user not to be contained in the trimming frame T, outside the trimming frame T with higher probability is achieved. Basically, the probability is increased as the image trimming operation is repeated. Therefore, it is desirable to repeat the image trimming more than once for the same group of images.

Now, a preliminary learning process for enhancing the learning effect is described. In this case, a group of images Q, which serves as supervised data, is prepared for original images P, for which the trimming frame is to be set, before the actual processing. The group of images Q may be prepared in advance at a photo shop, may be preferable images provided by the user, or may be determined such that some images are presented to the operator to be trimmed by the operator in a preferable manner and some of the trimmed images are used as the group of images Q.

If it is desired to carry out the preliminary learning in a completely automatic manner, since it is highly likely that an image taken by the user contains the region of interest, which is desired by the user to be placed in the trimming frame, around the center of the image, images taken by the user may be trimmed to contain a certain extent of area from the center of each image, and these trimmed images may be used as the group of images Q serving as the supervised data.

Each of the thus prepared group of images Q has a composition which is preferred as an image or preferred by the user. Subsequently, the operations of the above-described steps 101 to 109 are carried out with regarding that the trimming frame is set for each image of the group of images Q to contain the entire image each time (the trimming frame containing the entire image is set each time in step 103).

By performing the learning process in this manner, features of the regions of interest contained in the images are stored in the feature storing means 16 as features of regions of interest that should be placed inside the trimming frame. By carrying out the actual processing of the original images P after the preliminary learning, more preferable trimming can be achieved.

It should be noted that only one of the first learning and the second learning may be carried out.

Now, the region of interest and the saliency are described in detail. The region of interest is a portion in the original image P which attracts attention when the original image P is visually checked, such as a portion which has a color different from colors of the surrounding area in the original image P, a portion which is very lighter than the surrounding area in the original image P, or a straight line appearing in a flat image. Therefore, a degree of difference between the features of each portion and the features of the surrounding area in the original image P is found based on the colors and intensities in the original image P and the orientations of straight line components appearing in the original image P. Then, a portion having a large degree of difference can be extracted as the region of interest.

As described above, the region of interest that visually attracts attention has features of an image, such as color, intensity, a straight line component appearing in the image, which are different from those of the surrounding area. Therefore, using the colors and intensities in the original image P and the orientations of straight line components appearing in the original image P, the degree of difference between the features of each portion and the features of the surrounding area in the image is found, and a portion having a large degree of difference is considered as the region of interest that visually attracts attention. Specifically, the region of interest can automatically be extracted using the above-mentioned technique disclosed in the "A Model of Saliency-Based Visual Attention for Rapid Scene Analysis", L. Itti et al., IEEE TRANSACTIONS ON PATTERN ANALYSIS AND MACHINE INTELLIGENCE, Vol. 20, No. 11, NOVEMBER 1998, pp. 1254-1259.

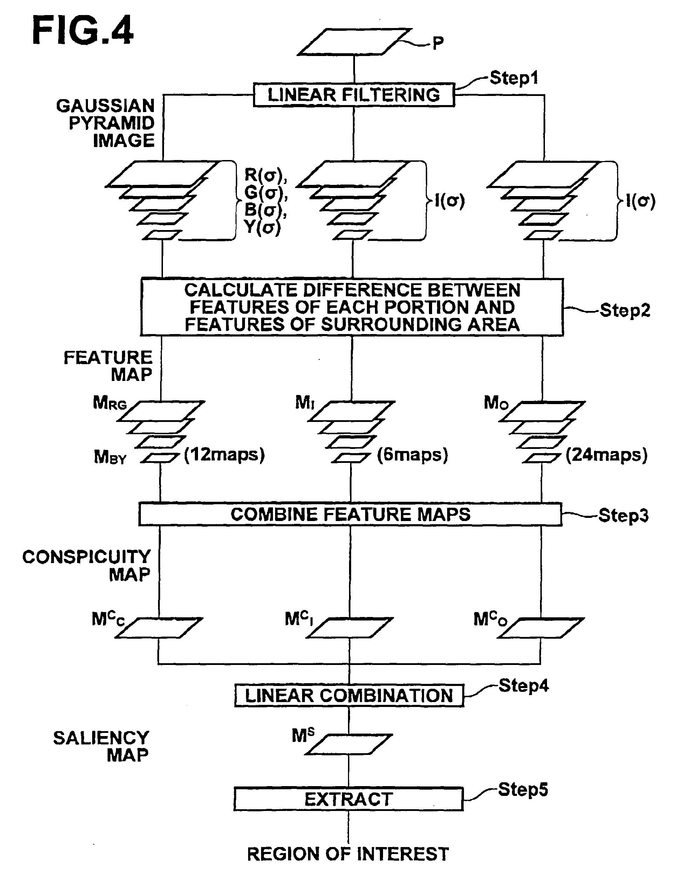

Now, the flow of a process of extracting the region of interest using this technique is described with reference to FIG. 4.

First, the original image P is filtered to generate an image representing intensities and color component images for separated color components (Step 1). Then, an intensity image I is generated from the original image P, and a Gaussian pyramid of the intensity image I is generated. An image at each level of the Gaussian pyramid is designated by I ($\sigma$) ($\sigma$ represents a pixel scale, where $\sigma \in [0..8]$).

Then, the original image P is separated into four color component images R (red), G (green), B (blue), and Y (yellow). Further, four Gaussian pyramids are generated from the images R, G, B and Y, and images at each level of the four Gaussian pyramids are designated by R($\sigma$), G($\sigma$), B($\sigma$) and Y(o).

Subsequently, feature maps, which represent the degrees of differences between the features of each portion and the features of the surrounding area in the original image P, are generated from these images I($\sigma$), R($\sigma$), G(o), B($\sigma$) and Y($\sigma$) (Step 2).

A portion in the image, which is detected to have an intensity different from the intensities of the surrounding area, is a dark portion in the light surrounding area or a light portion in the dark surrounding area. Therefore, the degree of difference between the intensity of the central portion and the intensities of the surrounding area is found using an image I(c) represented by finer pixels and an image I(s) represented by rougher pixels. A value of a pixel of the rougher image I(s) corresponds to values of several pixels of the finer image I(c). Therefore, by finding a difference (which is referred to as "center-surround") between the value of each pixel of the image I(c) (the intensity at the central portion) and the values of pixels at the corresponding position of the image I(s) (the intensities at the surrounding area), the degree of difference between each portion and the surrounding area in the image can be found. For example, assuming that the scale of the image I(c) represented by finer pixels is $c \in \{2,3,4\}$, the scale of the image I(s) represented by rougher pixels is $s = c+\delta$ ($\delta \in \{3,4\}$), an intensity feature map $M_I(c,s)$ is obtained. The intensity feature map $M_I(c,s)$ is expressed by equation (1) below:

$$M_I(c,s) = |I(c) \ominus I(s)| \qquad (1)$$

where, $\Theta$ represents an operator representing a difference between two images.

Similarly, color feature maps for the respective color components are generated from the images R($\sigma$), G($\sigma$), B($\sigma$) and Y($\sigma$). A portion in the image which is detected to have a color different from the colors of the surrounding area can be detected from a combination of colors at opposite positions (opponent colors) in a color circle. For example, a feature map $M_{RG}(c,s)$ is obtained from a combination of red/green and green/red, and a feature map $M_{BY}(c,s)$ is obtained from a combination of blue/yellow and yellow/blue. These color feature maps are expressed by equations (2) and (3) below:

$$M_{RG}(c,s) = |(R(c)-G(c)) \quad (G(s)\ominus R(s))| \qquad (2)$$

$$M_{BY}(c,s) = |(B(c)-Y(c)) \quad (Y(s)\ominus B(s))| \qquad (3).$$

Further, with respect to the orientations of straight line components appearing in the image, a portion which is detected to include a straight line component having a different orientation from the orientations of straight line components appearing in the surrounding area can be detected using a filter, such as a Gabor filter, which detects the orientations of the straight line components from the intensity image I. An orientation feature map $M_O(c,s,\theta)$ is obtained by detecting straight line components having each orientation $\theta$ ($\theta \in \{0°, 45°, 90°, 135°\}$) from the image I($\sigma$) of each level. The orientation feature map is expressed by equation (4) below:

$$M_O(c,s,\theta) = |M_O(c,\theta) \ominus M_O(s,\theta)| \qquad (4).$$

If $c \in \{2,3,4\}$ and $s = c+\delta$ ($\delta \in (3,4)$), six intensity feature maps, 12 color feature maps, and 24 orientation feature maps are obtained. The region of interest that visually attracts attention is extracted based on total evaluation of these feature maps.

The differences between each portion and the surrounding area shown by these 42 feature maps $M_I$, $M_{RG}$, $M_{BY}$ and $M_O$ may be large or not so large depending on differences in dynamic range and extracted information. If the region of interest is determined by directly using the values of the 42 feature maps $M_I$, $M_{RG}$, $M_{BY}$ and $M_O$, the determination may be influenced by the feature map showing a large difference, and information of the feature map showing a small difference may not be reflected. Therefore, it is preferred to normalize and combine the 42 feature maps $M_I$, $M_{RG}$, $M_{BY}$ and $M_O$ for extracting the region of interest.

Specifically, for example, a conspicuity map $M^C_I$ for intensity is obtained by normalizing and combining the 6 intensity feature maps $M_I(c,s)$, a conspicuity map $M^C_C$ for color is obtained by normalizing and combining the 12 color feature maps $M_{RG}(c,s)$ and $M_{BY}(c, s)$, and a conspicuity map $M^C_O$ for orientation is obtained by normalizing and combining the 24 orientation feature maps $M_O(c,s,\theta)$ (Step 3). Further, the conspicuity maps $N^C_I$, $M^C_C$ and $M^C_O$ for the respective features are linearly combined to obtain a saliency map $M^S$ representing a distribution of saliency values of the individual portions of the original image P (Step 4). A portion having the saliency that exceeds a predetermined threshold is extracted as the region of interest (Step 5).

When the region of interest is extracted, the region of interest to be extracted can be changed by varying degrees of the colors and intensities of the original image P and the orientations of straight line components appearing in the original image P, as well as weights assigned to these degrees, so that influences of the individual degrees of differences between the color, the intensity and the orientations of straight line components at each portion and those of the surrounding area in the original image P are changed. For example, the region of interest ROI to be extracted can be changed by changing weights assigned to the conspicuity maps $M^C_I$, $M^C_C$ and $M^C_O$ when they are linearly combined. Alternatively, weights assigned to the intensity feature maps $M_I(c,s)$, the color feature maps $M_{RG}(c,s)$ and $M_{BY}(c,s)$ and the orientation feature maps $M_O(c, s, \theta)$ when the conspicuity maps $M^C_I$, $M^C_C$ and $M^C_O$ are obtained may be changed, so that influences of the intensity feature maps $M_I(c,s)$, the color feature maps $M_{RG}(c,s)$ and $M_{BY}(c,s)$ and the orientation feature maps $M_O(c,s,\theta)$ are changed.

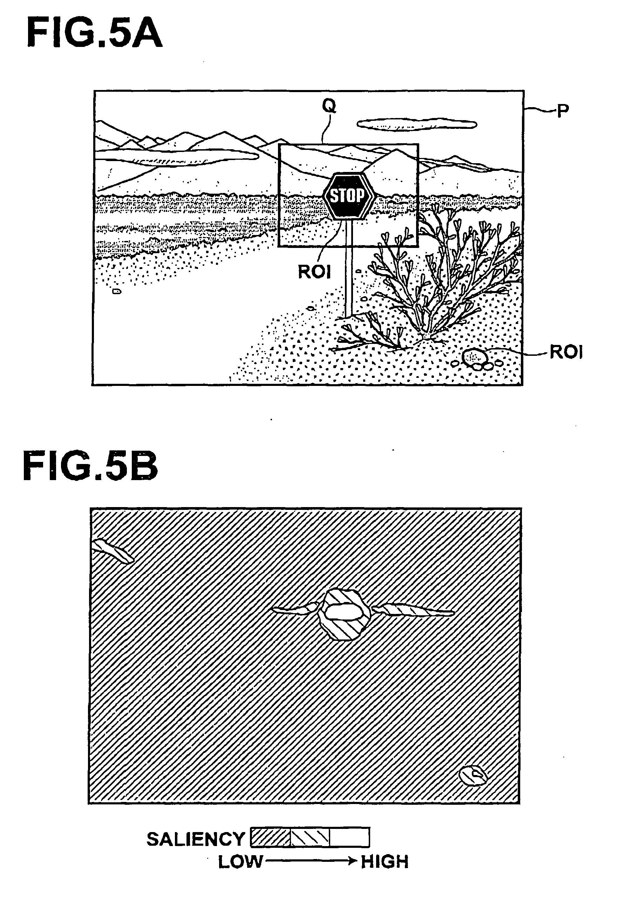

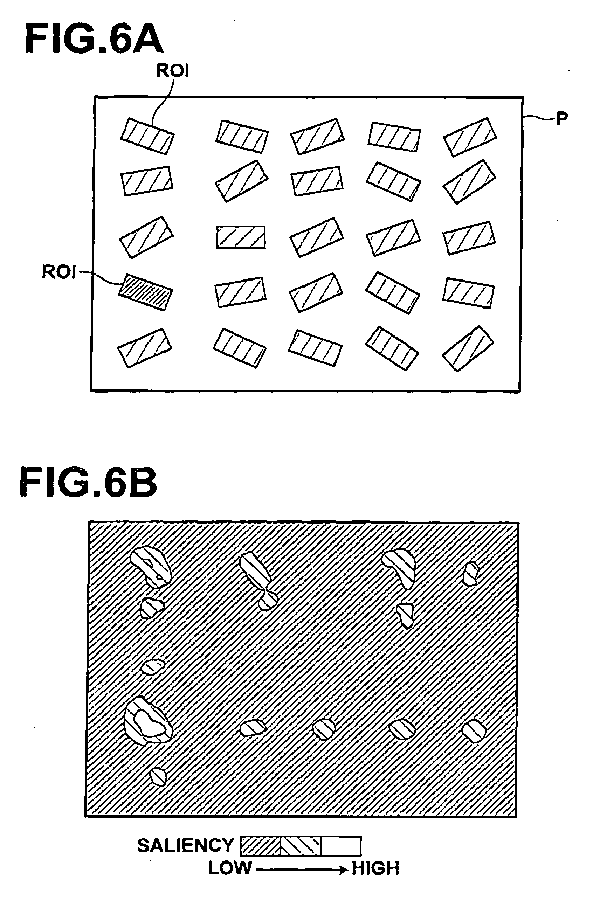

Explaining with a specific example, in an image containing a red traffic sign about the center of the image, as shown in FIG. 5A, colors of mountains and a road in the surrounding area are mostly brownish or grayish. Therefore, the color of the traffic sign largely differs from the colors of the surrounding area, and a high saliency is shown on the saliency map $M^S$. Then, as shown in FIG. 5B, the portions having the saliency not less than a predetermined threshold are extracted as the regions of interest ROI. In another example, if a red rectangle (the densely hatched portion) and green rectangles (the sparsely hatched portion) are arranged in various orientations, as shown in FIG. 6A, the red rectangle and some of the green rectangles which have a larger inclination than other rectangles have a higher saliency, as shown in FIG. 6B. Therefore, such portions are extracted as the regions of interest ROI.

As described above, the image trimming device of the invention is provided with the learning means that carries out the first learning to increase probability of each region of interest to be placed inside the trimming frame if the region of interest has a set of features that is similar to a set of features of another region of interest previously placed inside the trimming frame, and/or the second learning to decrease probability of each region of interest to be placed inside the trimming frame if the region of interest has a set of features that is similar to a set of features of another region of interest previously placed outside the trimming frame. This learning is carried out every time the trimming frame is automatically set, thereby increasing the probability of the automatically set trimming frame being a preferable trimming frame for each image. Further, by repeating the learning process with respect to a group of images for which the trimming frame is to be set, the effect of learning is enhanced and a more preferred trimming frame can be set for each image.

Moreover, by carrying out preliminary learning of images having compositions which are considered by the user as being preferable, or providing a feature to reflect the user's intention with respect to the result of the automatic trimming frame setting, the probability of the automatic trimming frame setting to meet the user's desire, such that the trimming frame is set to contain an area which is desired by the user to be contained in the trimmed image, or the trimming frame is set not to contain an area which is considered by the user as unnecessary, is increased. Thus, the image trimming device of the invention allows to automatically set a trimming frame as desired by the user with higher accuracy.

## Claims

1. An image trimming device comprising:

   region of interest extracting means (11) for extracting a region of interest from an image represented by original image data;

feature detecting means (12) for detecting a set of features for each extracted region of interest;

trimming frame setting means (13) for determining whether each region of interest should be placed inside a trimming frame or outside the trimming frame based on the set of features detected for each region of interest and setting the trimming frame in the image; and

image data extracting means (14) for extracting image data representing an image inside the set trimming frame from the original image data,

wherein the image trimming device is **characterized by** further comprising

learning means (15, 16, 17) for carrying out first learning and/or second learning by determining a positional relationship between each region of interest and the set trimming frame,

the first learning being carried out to increase probability of each region of interest to be placed inside the trimming frame when the region of interest has a set of features similar to a set of features of another region of interest previously placed inside the trimming frame, and

the second learning being carried out to decrease probability of each region of interest to be placed inside the trimming frame when the region of interest has a set of features similar to a set of features of another region of interest previously placed outside the trimming frame.

2. The image trimming device as claimed in claim 1, wherein the learning means (15, 16, 17) comprises:

correcting means (15) for carrying out first correction and/or second correction after the trimming frame has been set,

the first correction being carried out to correct at least one feature of the set of features of each region of interest inside the trimming frame to increase the probability of the region of interest to be placed inside the trimming frame, and

the second correction being carried out to correct at least one feature of the set of features of each region of interest outside the trimming frame to decrease the probability of the region of interest to be placed inside the trimming frame;

storing means (16) for storing the corrected set of features; and

controlling means (17) for searching through the storing means for a previously stored set of features similar to a set of features detected in current feature detection carried out by the feature detecting means, and inputting the searched-out set of features to the trimming frame setting means.

3. The image trimming device as claimed in claim 1 or 2, further comprising a display means (18) for displaying the image and the trimming frame.

4. The image trimming device as claimed in claim 3, further comprising an I/O interface for modifying the trimming frame displayed on the display means.

5. The image trimming device as claimed in any one of claims 1 to 4, wherein

the feature detecting means (12) detects a position in the trimming frame of the region of interest as one of the features, and

the trimming frame setting means (13) sets, before setting the trimming frame based on the set of features, an initial trimming frame for defining the position in the trimming frame.

6. The image trimming device as claimed in claim 5, wherein the trimming frame setting means (13) sets a predetermined fixed trimming frame as the initial trimming frame.

7. The image trimming device as claimed in claim 5, wherein the trimming frame setting means (13) sets the initial trimming frame based on frame specifying information fed from outside.

8. A recording medium containing a program for causing a computer to function as:

region of interest extracting means (11) for extracting a region of interest from an image represented by original image data;

feature detecting means (12) for detecting a set of features for each extracted region of interest;

trimming frame setting means (13) for determining whether each region of interest should be placed inside a trimming frame or outside the trimming frame based on the set of features detected for each region of interest and setting the trimming frame in the image;

image data extracting means (14) for extracting image data representing an image inside the set trimming frame from the original image data; and
learning means (15, 16, 17) for carrying out first learning and/or second learning by determining a positional relationship between each region of interest and the set trimming frame,
the first learning being carried out to increase probability of each region of interest to be placed inside the trimming frame when the region of interest has a set of features similar to a set of features of another region of interest previously placed inside the trimming frame, and
the second learning being carried out to decrease probability of each region of interest to be placed inside the trimming frame when the region of interest has a set of features similar to a set of features of another region of interest previously placed outside the trimming frame.

9. The recording medium as claimed in claim 8, further comprising a program for causing the learning means (15, 16, 17) to function as:

correcting means (15) for carrying out first correction and/or second correction after the trimming frame has been set,
the first correction being carried out to correct at least one feature of the set of features of each region of interest inside the trimming frame to increase the probability of the region of interest to be placed inside the trimming frame, and
the second correction being carried out to correct at least one feature of the set of features of each region of interest outside the trimming frame to decrease the probability of the region of interest to be placed inside the trimming frame;
storing means (16) for storing the corrected set of features; and
controlling means (17) for searching through the storing means for a previously stored set of features similar to a set of features detected in current feature detection carried out by the feature detecting means, and inputting the searched-out set of features to the trimming frame setting means.

10. The recording medium as claimed in claim 8 or 9, wherein the feature detecting means (12) detects a position in the trimming frame of the region of interest as one of the features, and
the trimming frame setting means (13) sets, before setting the trimming frame based on the set of features, an initial trimming frame for defining the position in the trimming frame.

11. The recording medium as claimed in claim 10, wherein the trimming frame setting means (13) sets a predetermined fixed trimming frame as the initial trimming frame.

12. The recording medium as claimed in claim 10, wherein the trimming frame setting means (13) sets the initial trimming frame based on frame specifying information fed from outside.

# FIG.1

<u>1</u>

EP 2 107 787 A1

# FIG.2

EXTRACT REGION OF INTEREST ~101

DETECT FEATURE ~102

105~ CLASSIFY REGIONS OF INTEREST — SET TRIMMING FRAME ~103

106~ CORRECT SALIENCY

EXTRACT IMAGE DATA ~104

107~ STORE CORRECTED SET OF FEATURES

108~ SEARCH FOR SET OF FEATURES

109~ SUBSTITUTE SET OF FEATURES

# FIG.3A

# FIG.3B

# FIG.4

P

LINEAR FILTERING — Step1

GAUSSIAN
PYRAMID
IMAGE

$R(\sigma)$,
$G(\sigma)$,
$B(\sigma)$,
$Y(\sigma)$

$I(\sigma)$

$I(\sigma)$

CALCULATE DIFFERENCE BETWEEN
FEATURES OF EACH PORTION AND
FEATURES OF SURROUNDING AREA
— Step2

FEATURE
MAP

$M_{RG}$      $M_I$      $M_O$

$M_{BY}$ (12maps)    (6maps)    (24maps)

COMBINE FEATURE MAPS — Step3

CONSPICUITY
MAP

$M^C{}_C$      $M^C{}_I$      $M^C{}_O$

LINEAR COMBINATION — Step4

SALIENCY
MAP

$M^S$

EXTRACT — Step5

REGION OF INTEREST

# FIG.5A

# FIG.5B

SALIENCY
LOW ⟶ HIGH

# FIG.6A

ROI

P

ROI

# FIG.6B

SALIENCY

LOW ⟶ HIGH

Europäisches
Patentamt

European
Patent Office

Office européen
des brevets

# EUROPEAN SEARCH REPORT

Application Number

EP 09 00 4591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2007/223047 A1 (KAMEYAMA HIROKAZU [JP]) 27 September 2007 (2007-09-27) * abstract; figures 1-7 * | 1 | INV. H04N1/387 |
| Y | US 2007/201749 A1 (YAMAUCHI MASAKI [JP] ET AL) 30 August 2007 (2007-08-30) * abstract * | 1 | |
| A | GB 2 370 438 A (HEWLETT PACKARD CO [US]) 26 June 2002 (2002-06-26) | | |
| A | GB 2 378 340 A (HEWLETT PACKARD CO [US]) 5 February 2003 (2003-02-05) * abstract * | 1 | |
| A | US 2005/025387 A1 (LUO JIEBO [US]) 3 February 2005 (2005-02-03) * abstract; figure 1 * | 1 | |
| A | EP 1 215 626 A (EASTMAN KODAK CO [US]) 19 June 2002 (2002-06-19) * abstract * | 1 | TECHNICAL FIELDS SEARCHED (IPC) H04N |
| A | US 2006/280364 A1 (MA YUE [US] ET AL) 14 December 2006 (2006-12-14) * abstract; figure 3 * | 1,8 | |

The present search report has been drawn up for all claims

| Place of search | Date of completion of the search | Examiner |
|---|---|---|
| Berlin | 15 July 2009 | Kassow, Harald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 00 4591

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2009

| Patent document cited in search report | | | Publication date | Patent family member(s) | | | Publication date |
|---|---|---|---|---|---|---|---|
| US 2007223047 | A1 | | 27-09-2007 | JP | 2007258869 | A | 04-10-2007 |
| US 2007201749 | A1 | | 30-08-2007 | WO | 2006082979 | A1 | 10-08-2006 |
| GB 2370438 | A | | 26-06-2002 | EP | 1371017 | A2 | 17-12-2003 |
| | | | | WO | 02052835 | A2 | 04-07-2002 |
| | | | | JP | 2004520735 | T | 08-07-2004 |
| | | | | US | 2002191861 | A1 | 19-12-2002 |
| GB 2378340 | A | | 05-02-2003 | EP | 1419453 | A2 | 19-05-2004 |
| | | | | WO | 03012678 | A2 | 13-02-2003 |
| | | | | JP | 2004537901 | T | 16-12-2004 |
| | | | | US | 2004080670 | A1 | 29-04-2004 |
| US 2005025387 | A1 | | 03-02-2005 | EP | 1649681 | A1 | 26-04-2006 |
| | | | | JP | 2007500967 | T | 18-01-2007 |
| | | | | WO | 2005013602 | A1 | 10-02-2005 |
| EP 1215626 | A | | 19-06-2002 | JP | 3946030 | B2 | 18-07-2007 |
| | | | | JP | 2002218223 | A | 02-08-2002 |
| | | | | US | 2002114535 | A1 | 22-08-2002 |
| US 2006280364 | A1 | | 14-12-2006 | NONE | | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007258870 A

**Non-patent literature cited in the description**

- **L. Itti et al.** A Model of Saliency-Based Visual Attention for Rapid Scene Analysis. *IEEE TRANSACTIONS ON PATTERN ANALYSIS AND MACHINE INTELLIGENCE,* November 1998, vol. 20 (11), 1254-1259